(19) **Europäisches Patentamt / European Patent Office / Office européen des brevets**

(11) **EP 3 431 967 B1**

(12) **EUROPEAN PATENT SPECIFICATION**

(45) Date of publication and mention of the grant of the patent:
**07.06.2023   Bulletin 2023/23**

(21) Application number: **17182210.9**

(22) Date of filing: **19.07.2017**

(51) International Patent Classification (IPC):
**G01N 21/64** (2006.01)

(52) Cooperative Patent Classification (CPC):
**G01N 21/6408**

(54) **METHOD FOR COMPENSATING DETECTOR PULSE PILE-UP EFFECTS IN TIME-CORRELATED SINGLE-PHOTON COUNTING APPLICATIONS**

VERFAHREN ZUR KOMPENSATION VON DETEKTORIMPULSANHÄUFUNGSEFFEKTEN IN ZEITKORRELIERTEN EINZELPHOTONENZÄHLUNGSANWENDUNGEN

PROCÉDÉ DE COMPENSATION DES EFFETS D'EMPILEMENT D'IMPULSION DE DÉTECTION DANS DES APPLICATIONS DE COMPTAGE MONOPHOTONIQUE À CORRÉLATION TEMPORELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.01.2019   Bulletin 2019/04**

(73) Proprietor: **PicoQuant Innovations GmbH**
**12489 Berlin (DE)**

(72) Inventors:
• **Patting, Rainer Matthias**
  **14532 Kleinmachnow (DE)**
• **Wahl, Michael**
  **12587 Berlin (DE)**

(74) Representative: **Schulz Junghans**
**Patentanwälte PartGmbB**
**Großbeerenstraße 71**
**10963 Berlin (DE)**

(56) References cited:
**EP-A1- 3 370 086     WO-A1-2010/089363**

• **COATES: "The correction for photon pile-up in the measurement of radiative lifetimes"**, JOURNAL OF PHYSICS E. SCIENTIFIC INSTRUMENTS, IOP PUBLISHING, BRISTOL, GB, vol. 1, no. 1, 1 January 1968 (1968-01-01) , page 878/879, XP002111897, ISSN: 0022-3735, DOI: 10.1088/0022-3735/1/8/437
• **REED S J B: "Dead time corrections for x ray intensity measurements with a Si(Li) detector"**, JOURNAL OF PHYSICSE SCIENTIFIC-INSTRUMENTS,, vol. 5, no. 10, 1 October 1972 (1972-10-01), pages 994-996, XP001432005,

**Description**

The invention relates to a method for estimating and accounting for detector pulse pile-up effects in time-correlated single-photon counting applications, particularly when fitting a decay histogram. The invention furthermore relates to a computer program for fitting an adjusted model-function to a decay histogram generated from a time-correlated single-photon counting measurement.

Time-resolved fluorescence microscopy or spectroscopy is an important tool for analyzing a luminescent sample.

One of the most popular ways to measure for example a fluorescence lifetime of a compound is to perform time-domain-based single-photon counting measurements.

Analogously to fluorescence also a phosphorescence decay or any other photo-luminescence lifetime can be measured, wherein the measurement system might be adjusted to the different time scale of decays accordingly.

In order to perform such time-domain single-photon counting measurements, the measurement system comprises a pulsed light source providing excitation pulses to the sample, and a single-photon detector connected to a recording device, often referred to as a Time-Correlated Single-Photon Counting (TCSPC-) electronics for registering and recording the detected photons in a time-correlated manner, i.e. the timing information of each detected photon is associated with the timing information of the corresponding excitation pulse, or recorded alone.

In a time-resolved fluorescence measurement, the light source usually provides excitation pulses at repetition rates in the MHz region, and the measurement system has a time resolution in the nano- or picosecond range.

During a measurement, the sample is exposed to a very large number of excitation pulses (million(s) per second).

Consequently, during an experiment, a large number of photon detection events are recorded in such a measurement.

As for each photon a precise timing information is available, particularly with respect to the preceding excitation pulse(s), it is possible to histogram the photon arrival times, each with respect to its excitation pulse.

The resulting histogram is referred to as the decay histogram. On the x-axis, the relative timing between laser pulse and photon detection is plotted (in discrete time bins), whereas on the y-axis the number of photon detection events within the respective time bin is shown as a function of the relative timing.

As the fluorescence lifetime, but also many other luminescent decays, exhibit an (multi-) exponential decay characteristic, these histograms are often plotted logarithmically on the y-axis.

The exponential decay characteristic, in turn, translates to a high photon detection probability right after the excitation pulse and an exponentially lower photon detection probability at a later time.

In theory, this has no particular significance, however, in applications comprising detectors or electronics the exponential probability distribution cannot be neglected.

Almost all electronics employed in a high-resolution TCSCP measurement system exhibit a dead time. The dead time of the TCSPC-electronics basically results from the fact that once a photon is (being) registered (in form of an incoming electric pulse from the detector), the timing circuit is busy processing this pulse.

During this time, any incoming electric pulse will be disregarded and not registered by the recording device. The dead time refers to the interval during which the recording device cannot register another photon.

Considering the exponential probability distribution of incident photons after an excitation pulse, this can have severe consequences on the estimated decay histogram. At high count rates, the registration probability for "late" photons (e.g. photons arriving later than roughly a quarter of the lifetime of the sample after the excitation pulse) is reduced by the fact that there is a high probability that an "early" photon (a photon arriving prior to the quarter of the lifetime) has been registered by the TCSPC-electronics and the "late" photon from the same excitation cycle might go unregistered due to the dead time.

For this reason, such measurements are typically performed at count rates that are well below the excitation rate (~ 1% of the excitation rate), i.e. only a few percent of excitation pulses do cause a photon registration event at all. Thus, the probability to record two photons in the detection system with the same excitation pulse is negligible (-0.01%).

Recently, essentially dead time-free TCSPC-electronics have emerged that have dead times in the range of 1 ns, and thus are capable to detect more than one photon during an excitation cycle. These electronics allow for much higher count-rates and thus shorter measurement times. This is particularly advantageous for fast fluorescence lifetime imaging (FLIM) measurements on scanning microscopes or fast (on-line) monitoring of fluorescence lifetimes in spectroscopy and applications that require particularly short measurement times.

In the following, an electric pulse is considered particularly an electric signal of limited duration that particularly deviates from a baseline potential either positively or negatively. An electric pulse can also be the derivative of a signal as described above or a temporally limited voltage oscillation around a baseline potential.

As the dead time effect can be overcome to a certain degree by fast TCSPC-electronics, a second effect might lead to unwanted distortions of the acquired decay histogram. As the count rate increases and the electric pulses exhibit a certain duration, the temporal distance between electric pulses from the detector decrease and the pulses start to overlap. This effect is called detector pulse pile-up.

However, the TCSPC-electronics can identify overlapping pulses (or pulses that are not clearly separable) only to a certain degree as two or more photon detection events. If the pulses overlap too much, the recording device will only register a single photon for such a piled-up pulse comprising at least two closely spaced electric pulses. Therefore, there is a lower limit to the interval between two electric pulses that can still be resolved by the recording device (in the following referred to as the smallest resolvable interval). Pulses that are spaced apart closer than this limit are registered only as a single electric pulse by the recording device.

The detector pulse pile-up leads to a disproportional decrease of registered "early" photons of the measurement system, as these photons (due to the exponential lifetime characteristic of excited states) have a higher probability of occurrence. The higher probability of occurrence, in turn, leads to a higher probability of piled-up electric pulses right after the excitation pulse. As these pulses are counted only as one photon (instead of two or more), "early" photons tend to be lost by the TCSPC electronics more often. When analyzing the resulting decay time of the decay histogram, this leads to artefacts that particularly shift the estimated lifetime towards longer lifetimes.

As of today, the detector pulse pile-up is accounted for by reducing the count rate in an experiment, i.e. to simply avoid detector pulse pile-up by reducing the count rate in an experiment, which unfavorably leads to longer measurement times. This is particularly disadvantageous for applications where acquisition time is limited, e.g. because of sample dynamics, but also for FLIM measurements on scanning microscopes.

Coates B P, "The correction for photon 'pile-up' in the measurement of radiative lifetimes", Journal of Physics E Scientific Instruments, Volume 1, no. 1, 1 January 1968, page 878/879, teaches a correction method for photon 'pile-up' in measurements of radiative lifetimes. The term 'photon pile-up' refers to the neglecting of photons that arrive after a first photon has been detected due to a detector dead time resulting in the observed lifetime being too short and not to the detector pulse pile-up that has its source at a different origin. The resulting effects in histogram distortion are therefore of different nature.

WO 2010/089363 A1 discloses a method for determining distribution parameters of a fluorescence decay histogram recorded with time-resolved fluorescence measurements and addresses the problem photon pile-up effect due to detector and electronic dead times. However, a solution for detector pulse pile-up is not addressed.

Reed S J B, in "Dead time corrections for x-ray intensity measurements with a Si(Li) detector", Journal of Physics E Scientific Instruments, Volume 5, no 10, 1 October 1972, pages 994-996 teaches a method for correcting artefacts in x-ray intensity steady state spectra due to detector or electronic dead-times as well as detector pulse pile-up. Reed does not mention essentially dead-time free detectors.

Further, EP 3370086 A1 discloses a method for adjusting a histogram distortion due to pile-up by determining a probability of readout saturation of an OR-tree receiving detector pulses from a plurality of detectors, and outputting a logical 1, when a detector signal is received of either detector. In case the rate of detector pulses is too high, the OR-tree may not be able to discriminate between two pulses stemming from different detectors and outputs only one high signal. The method is configured to determine a probability of saturation for the OR-tree and to compensate a recorded histogram of arrival times stemming from time-of-flight measurements such as LIDAR by scaling the histogram bin values by a scaling value based on the probability of readout saturation.

The objective of the invention is to provide a method for preventing artefacts in the analysis of decay histograms due to piled-up pulses that have been acquired at high count rates.

This objective is achieved by a method that estimates and correctly addresses detector pulse pile-up in time-correlated single-photon counting applications according to claim 1.

Furthermore, the problem according to the invention is also solved by a computer program for fitting an adjusted model-function to a decay histogram according to claim 15. Advantageous embodiments are described in the dependent claims.

According to claim 1, a method that estimates and correctly addresses detector pulse pile-up effects in time-correlated single-photon counting applications, particularly for fitting a model-function to a decay histogram, comprises the steps of:

- Acquiring a decay histogram from a time-correlated single-photon counting measurement, the decay histogram particularly comprising discrete time channels for binning the acquired data,

  wherein said measurement comprises the detection of photons with a detector, which converts the detected photons into corresponding electrical pulses forming a sequence of electrical pulses,
  wherein the sequence of electrical pulses comprises particularly overlapping electrical pulses that are spaced apart by a time interval that is shorter than a smallest resolvable interval of a recording device,
  wherein the recording device registers and particularly records in a time-correlated single-photon counting manner, the electric pulses from the detector, wherein electric pulses exhibiting a spacing shorter than the smallest resolvable interval are registered as a single electric pulse by the recording device,

- Estimating for each channel of the decay histogram a probability of occurrence of the electric pulses that exhibit a spacing longer than the smallest resolvable interval.
- Fitting an adjusted model-function to the decay histogram, wherein the adjusted model-function comprises an unadjusted model-function being adjusted for each channel (herein also referred to as time bin or bin) of the decay histogram with the estimated probability of occurrence of electric pulses being spaced apart further than the smallest resolvable interval $p_i$ for the corresponding channel.

Using the above method at least one physical parameter of a sample, from which the histogram has been acquired, can be estimated, wherein said physical parameter is particularly estimated from at least one fit parameter of the fitted and adjusted model function, wherein particularly the at least on physical parameter comprises a lifetime of the sample.

The method according to the invention solves the problem by adjusting a model-function with a physics-based approach to an acquired histogram. This stands in contrast to an empirical model or an iterative approach trying to recover a pile-up-free decay histogram from the measurement data.

The acquisition of the decay histogram particularly comprises the loading of a previously acquired decay histogram or the generation of a decay histogram from a time-correlated single-photon measurement. Equivalently to a time-correlated single-photon measurement an in silico simulation can serve as a time-correlated single-photon measurement.

A decay histogram comprises for example on one axis (e.g. on the x-axis) channels, also referred to as bins, and on the other axis (e.g. y-axis) the frequency, probability or number of occurrence of a detection event in the corresponding channel.

For excited state lifetime measurements, such histograms often exhibit an exponential decay, comprising a single or a plurality of excited state lifetimes.

Thus, from an estimated lifetime or decay of the histogram a lifetime, multiple lifetimes or the decay characteristic of a sample can be estimated.

The detected photons are particularly in the visible range or close to the visible range, particularly including the near ultraviolet wavelength range starting at 200 nm and/or extending up to the near infrared spectral region at 2000 nm.

For this reason, particularly detectors with high sensitivity over the whole or at least some part of the spectral range are used. Furthermore it is of advantage if these detectors exhibit short dead times and provide comparably short and uniform electric pulses upon photon detection.

The detected photons are translated by the detector in a sequence of electric pulses whose temporal spacing corresponds to the temporal spacing of the corresponding photon detection events.

If the spacing between photon detection events becomes too short, e.g. because the count rate of the measurement is high, some electric pulses start to overlap such that the recording device cannot resolve them anymore. These overlapping electric pulses are the electric pulses that are spaced below the smallest resolvable interval of the recording device.

As the smallest resolvable interval depends on the width (in the sense of a duration) of the electric pulses. A short pulse width is of the essence for keeping the smallest resolvable interval short. However, the width cannot be reduced infinitely.

The width of the electrical pulses, particularly the full-width at half-maximum (FWHM) of the detector suitable for the method according to the invention, is for example in the order of 500 ps, and the height of an electrical pulse stemming from a single-photon detection event is typically around 300 mV with amplification.

Detectors providing suitable properties for performing the method according to the invention are for example hybrid photon detectors (HPD), or superconducting nanowire single-photon detectors (SNSPD). These detectors comprise a comparably high sensitivity for single photons, exhibit reasonable dead times and deliver comparably short electric pulses.

The smallest resolvable interval also depends on the discrimination electronics of the recording device, particularly a discrimination threshold, as well as the pulse shape.

The smallest resolvable interval is particularly between 0.1 ns and 1 ns, more particularly 0.5 ns.

The electric pulses spaced below the smallest resolvable interval of the recording device are registered by the recording device as a single pulse only, as the device is incapable of resolving the plurality of pulses in such a piled-up pulse. The smallest resolvable interval is therefore a property of the measurement system, i.e. particularly a property of the combination of the detector and the recording device.

The fraction of electric pulses being piled-up, i.e. electric pulses whose spacing is shorter than the smallest resolvable interval, particularly depends on the count rate during the measurement and the decay (especially the lifetime) of the sample.

For example, measuring a sample exhibiting a fluorescence lifetime of 3 ns, at 20 MHz excitation rate, and a registered count rate of $5 \times 10^6$ counts per second at the recording device, the number of piled-up pulses becomes so large that detector pulse pile-up starts to significantly distort the decay histogram.

The method according to the invention can be applied to a histogram independently of the existence of pile-up pulses, as the method is not adversely impacting the fit results using the adjusted model-function rather than the unadjusted model-function.

On the other hand, while there is no theoretical upper bound for the count rate and thus the size of the fraction of the piled-up pulses, other systematic errors start to influence the measurement.

While the detector pulse pile-up starts to influence the decay histogram in terms of the magnitude of particularly the evaluated lifetime and other parameters, starting around $2 \times 10^6$ counts per second (e.g. with an excitation rate of 20 MHz), the upper bound of applicable count rates lies around $25 \times 10^6$ to $70 \times 10^6$ counts per second.

Thus, the method according to the invention increases the applicable count rate interval by a factor of more than 10, which translates to a more than ten-fold decrease in measurement time. It is noted explicitly that the upper bound is not due to a break-down of the proposed method, but because of other instrumentation effects that become significant at these count rates.

The fraction of piled-up electric pulses in the measurement is particularly greater than 1% more particularly greater than 5% and even more particularly greater than 10% of all electric pulses.

Whether the fraction of piled-up pulses in the measurement is distorting the shape of the decay histogram significantly and thus an adjusted model-function should be applied, can be evaluated visually by assessing the aberrations and systematic deviations in the residuals trace (difference between fitted model-function and decay histogram), particularly when the count rate of the measurement exceeds 1% of the excitation rate.

The recording device comprises electronics that are configured for registering the electric pulses with high accuracy. This includes particularly a time-to-digital converter that is configured to convert with high precision the arrival time of an electric pulse to a corresponding digital number indicating the time of arrival.

The recording device is connected to the detector so that the electric pulses can be received by the recording device.

The temporal resolution of the recording device is particularly between 1 ps and 500 ps.

The dead time of the recording device can be as short as 1 ns or shorter, rendering it effectively dead time-free if its dead time is shorter than the pulse width of the detector.

The digital number that indicates the arrival time can be saved in a measurement file that comprises all arrival times of electric pulses, as well as particularly the times of the excitation pulses of the light source and other markers, e.g. indicating scanner positions, or other external events. This mode of recording is also referred to as "recording in a time-correlated single-photon counting manner" in the description.

The probability of occurrence of piled-up pulses can be determined from parameters from the measurement. Measured relative to the last photon that has been detected by the detector, the fraction of electric pulses that arrive within a shorter time span than the smallest resolvable interval $dt$ from each other is given by 1 - $exp(-n \cdot dt)$, wherein n is the count rate of the incident photons. As each photon that arrives within this time span is lost, the fraction of electrical pulses that is detectable, is therefore given by $exp(-n \cdot dt)$.

This probability can be refined to the specific case of a histogram and its differential count rates per channel. The differential count rate of a channel (also referred to as bin) is defined as the number of photons within the bin per measurement time, normalized by the fraction of time the bin occupies within the excitation cycle.

For example, because the detection probability of photons is higher right after an excitation pulse, the differential count rate is initially high and then decreases as the excited state of the sample decays.

The differential count rate $dn_i$ can therefore be estimated by

$$dn_i = f_{exc}^2 \cdot b \cdot Dec_{Mod}(t_i)/N_{exc}$$

$f_{exc}$ being the excitation rate, $b$ being the bin width of the histogram, $Dec_{Mod}(t_i)$ being the unadjusted decay histogram and $N_{exc}$ being the number of excitation pulses during the measurement. The index i refers to the specific bin of the histogram and $t_i$ being the relative time between the excitation and detection.

The excitation rate and the number of excitation pulses are straightforwardly accessible from the measurement.

The probability of electric pulses that are spaced apart farther than the smallest resolvable interval can be formulated for each channel of the decay histogram as

$$p_i = exp(-dn_i \cdot dt) \quad \text{[eq. 1]}$$

This probability can be used for adjusting the unadjusted model-function to the decay histogram for each channel.

The unadjusted model-function is configured to fit a decay histogram that would be recorded without any or with a negligible amount of piled-up pulses.

The unadjusted model-function, therefore, needs to be adjusted by the occurrence of piled-up pulses in order to be able to correctly fit a decay histogram that is distorted by detector pulse pile-up. This is done by adjusting the unadjusted model-function with the probability of occurrence of electric pulses that are spaced farther apart than the smallest resolvable interval for each channel.

When there is no or only a small fraction of detector pulse pile-up in the measurement, this probability equals one and has no impact on the shape of the model-function.

The unadjusted model-function may comprise, for example, the convolution with an instrument response function of the measurement system, a temporal offset of the decay histogram, or an offset along the y-axis due to background counts, as well as the physical model that is used to fit the decay histogram, wherein that physical model particularly does not comprise dedicated means for adjusting to the influence of detector pulse pile-up.

Fitting can be done with a variety of algorithms, wherein most fitting algorithms have an objective function that is to be minimised or maximised and that is configured to indicate the quality of fit.

According to another embodiment of the invention, the probability of occurrence of electric pulses spaced apart farther than the smallest resolvable distance can be expressed or is expressed as an exponential function, wherein the exponent of the exponential function comprises the smallest resolvable interval as an exponent.

This embodiment has been elaborated already above in an example (see equation eq. 1). The approach of describing the probability of occurrence by an exponential function comprising the probability of occurrence is based on physical assumptions and thus reflects the physical basis for the adjustment of the unadjusted model-function.

According to another embodiment of the invention, the adjusted model-function is fitted to the decay histogram, wherein the unadjusted model-function $Dec_{mod}(t_i)$ is multiplied for each channel of the decay histogram with the estimated probability of occurrence of electric pulses spaced apart farther than the smallest resolvable interval $p_i$ for the corresponding channel.

It is known to the person skilled in the art, that mathematically equivalent expressions for real space operations can be found in Fourier space and other mathematical spaces (e.g. Laplace space). These equivalent expressions are herewith explicitly comprised in the description and are meant to be protected by the corresponding claims.

As long as not explicitly stated otherwise the multiplication particularly refers to real-space data fitting.

The adjusted model-function $Dec_{adj}(t_i)$ can, for example, be written as,

$$Dec_{adj}(t_i) = Dec_{mod}(t_i) \cdot p_i = Dec_{mod}(t_i) \cdot exp(-d\mathrm{n}_i \cdot \mathrm{dt}) \quad [\text{eq. 2}]$$

This formulation for fitting is a very time-efficient and computational cost-effective way to adjust a model-function to a decay histogram that is distorted by artefacts stemming from detector pulse pile-up.

A simple multiplication can be used for adjusting any model-function to the distorted (in terms of detector pulse pile-up artefacts) decay histogram, rather than iteratively adjusting the acquired decay histogram for detector pulse pile-up prior.

This straightforward, iterative approach tries to reconstruct a pile-up-unaffected decay histogram, by solving equation eq. 2 for $Dec_{mod}(t_i)$ and substituting the measured decay for $Dec_{mod}(t_i)$, thus generating a corrected measured decay. As this is not possible analytically, a solution is found iteratively by assuming an initial decay histogram that is iteratively adjusted based on the result of an objective function. However, such an iterative approach is not only computationally expensive, but it also distorts the photon noise statistics of the originally acquired decay histogram. That, in turn, might influence the magnitude of the resulting fit-parameters of the decay histogram.

As detailed above, according to one embodiment of the invention, the probability of occurrence of electric pulses spaced apart farther than the smallest resolvable interval is expressed or can be expressed as

$$\mathrm{p}_i = exp(-d\mathrm{n}_i \cdot dt)$$

for each channel, wherein $p_i$ is the probability of occurrence for the *i*-th channel of the histogram, *i* being an index for indexing the channels of the histogram and

wherein $d\mathrm{n}_i$ is the differential count rate for the *i*-th channel, wherein said differential count rate particularly depends on the unadjusted model-function $Dec_{mod}(t_i)$, and an excitation rate $f_{exc}$ of the measurement, and wherein the unadjusted model-function $Dec_{mod}(t_i)$ is multiplied by said probability of occurrence $p_i$.

As explained above, this embodiment is based on physics-based assumptions on photon statistics and is thus a suitable approach for adjusting the unadjusted model-function.

According to another embodiment of the invention, the probability of occurrence of electric pulses spaced apart farther than the smallest resolvable interval $p_i$ is expressed or can be expressed as

$$\mathrm{p}_i = exp\left(-f_{exc}{}^2 \cdot b \cdot Dec_{mod}(t_i) \cdot \mathrm{dt}/N_{exc}\right)$$

for each channel, wherein $N_{exc}$ is the total number of excitation pulses of the measurement, the adjusted model-function is expressed or can be expressed as

$$Dec_{adj}(t_i) = Dec_{mod}(t_i) \cdot exp\left(-f_{exc}{}^2 \cdot b \cdot Dec_{mod}(t_i) \cdot \mathrm{dt}/N_{exc}\right) \qquad \text{[eq. 3]}$$

It can be seen that the above equation eq. 3 cannot be solved for the unadjusted model-function analytically, but it provides a computationally cost-efficient way to adjust the unadjusted model-function to the acquired histogram by multiplying the unadjusted model-function with the exponential term comprising the smallest resolvable interval $dt$, the excitation rate $f_{exc}$, the unadjusted model-function $Dec_{mod}(t_i)$, and the number of excitation pulses $N$. Almost all parameters are accessible from the measurement itself, wherein there are different ways of how to estimate the smallest resolvable interval.

According to another embodiment of the invention, the smallest resolvable interval is provided prior to applying a fitting algorithm for fitting the adjusted model-function to the decay histogram, or the smallest resolvable interval is an adjustable fit-parameter that is adjustable during the fitting with the fit algorithm.

This embodiment teaches two ways of estimating the smallest resolvable interval.

As the smallest resolvable interval is a measurement system parameter, the smallest resolvable interval might be estimated only once, for a particular measurement system. The smallest resolvable interval is independent of the sample or the decay histogram, but depends only on the detector, the recording device properties and connecting means, such as cables, amplifiers, and other devices modifying the electric pulses before they are received by the recording device.

The once estimated smallest resolvable interval can be used in subsequent measurements and does not need to be assigned as a fit parameter for the fit algorithm.

If the smallest resolvable interval is not known for a given measurement system, it can be assigned as a variable fit parameter to the fit algorithm and estimated simultaneously with a measurement whose primary purpose might not be the estimation of the smallest resolvable interval.

According to another embodiment of the invention, the smallest resolvable interval is estimated during the fitting step, the smallest resolvable interval being assigned as an adjustable fit parameter, wherein particularly the measurement is performed on a sample that exhibits a well-known, particularly mono-exponential lifetime, such as a sample comprising an organic dye.

The result for the estimated smallest resolvable interval is particularly displayed to a user.

As explained above the smallest resolvable interval needs to be estimated only once and therefore a dedicated measurement for estimating the smallest resolvable interval can be performed. Such a dedicated measurement can be performed on a sample that exhibits known physical properties, particularly regarding the excited state lifetime(s).

A sample exhibiting a mono-exponential decay is particularly suitable. However, also multi-exponential decays can be used.

The measurement conditions for the estimation of the smallest resolvable interval obviously have to comprise piled-up electric pulses.

According to another embodiment of the invention, the fitting of the adjusted model-function to the decay histogram is performed by a fit algorithm based on or being a maximum-likelihood estimation.

The experimental noise governing photon detection at low photon numbers exhibits a Poisson distribution. This distribution is addressed or taken into account by the maximum likelihood estimator and thus, the maximum likelihood estimation is particularly suitable for evaluating such time-correlated single-photon measurements.

The maximum likelihood estimator will introduce systematic errors concerning the fitted parameters, when the iterative approach is used (as detailed above), as the noise distribution of the decay histogram becomes distorted, thus violating the requirements for the applicability of a maximum likelihood estimator.

According to another embodiment of the invention, the unadjusted model-function is configured for taking into account an instrument response function.

The unadjusted model-function is configured to fit parameters to the decay histogram that are not related to the smallest resolvable interval. Therefore the unadjusted model-function is particularly configured to take into account the effect of the instrument response function on the shape of the decay histogram.

The instrument response function can be estimated on a sample that does not exhibit a fluorescence decay characteristic or that exhibits only very short lifetimes (e.g. 10 ps).

The instrument response function accounts for the finite excitation pulse width and shape, as well as for the detector response to an incident photon.

In order to arrive at the "correct" decay histogram, the model-function particularly has to be convolved with the instrument response function in order to match the acquired decay histogram.

According to the invention, the fitting approach needs no alteration but can be maintained unchanged, while the detector pulse pile-up is accounted for in a separate term/factor.

According to another embodiment of the invention, a dead time of the recording device is shorter than the smallest resolvable interval.

This embodiment essentially leads to a dead-time free measurement. Under these circumstances, the acquired decay histogram does not exhibit dead time effects, which in combination with the detector pulse pile-up estimation and correction, results in a measurement system and a method that solves the problem of the detector pulse pile-up distortions of the decay histogram (by correcting the model-function) as well as dead time associated decay histogram distortions (that do not show in the decay histogram anymore).

In case the dead time of the recording device is longer than the smallest resolvable interval, the additional dead time effect on the histogram can be accounted for as well (see. e.g. M. Patting, M. Wahl, P. Kapusta, R. Erdmann "Dead-time effects in TCSPC data analysis ", Proceedings of SPIE, Vol.6583, 658307 (2007)).

However, these additional distortions of the decay histogram would require an additional fit parameter in the particularly unadjusted model-function, which potentially decreases the fit accuracy (due to the increased degrees of freedom).

The estimation and correction for detector pulse pile-up together with a virtually dead time free measurement system (i.e. when the dead time is shorter than the smallest resolvable interval), allows for up to factor 10 to 20 increased count rates, without compromising the quality of the resulting fit and accuracy of the estimated fit parameters.

According to another embodiment of the invention, the recording device has a time resolution better than 500 ps, particularly better (i.e. shorter) than 300 ps, more particularly longer (i.e. worse) than 50 ps.

Recording devices with high temporal resolution, i.e. with a high accuracy of determining the time of arrival, in the order of a few picoseconds usually exhibit relatively long dead times. On the other hand, recording devices with a comparably low temporal resolution in the range of 50 ps to 500 ps, exhibit comparably short dead times (around 1 ns), particularly due to their different electronic architecture. In many applications, sacrificing temporal resolution is not problematic, particularly when this yields a dead time that is shorter than the smallest resolvable interval (and therefore gaining an essentially dead time-free system).

According to another embodiment of the invention, a lifetime of the sample is longer than 0.02 ns, particularly longer than 0.2 ns, more particularly longer than 0.5 ns, and/or shorter than $100\mu s$, particularly shorter than $1\mu s$, more particularly shorter than 50 ns, more particularly shorter than 10 ns.

The method according to the invention is particularly suited to compensate detector pulse pile-up in the lifetime durations of this embodiment. The lifetime of a sample particularly refers to the excited state lifetime of a compound, a molecule, or a colloidal particle, such as a quantum dot, or a nanorod, wherein the observable signal is the incidence of photons at the detector.

The lifetime of a compound therefore particularly refers to the fluorescence lifetime, the phosphorescence lifetime, or the photo-luminescence or the chemo-luminescence lifetime of the compound.

According to another embodiment of the invention, the measurement is performed on a photo-luminescent sample, particularly a fluorescent sample or a phosphorescent sample, particularly emitting photons in the wavelength range between 200 nm and 2000 nm.

This embodiment is for example conducted in time-resolved optical spectroscopy or microscopy applications, particularly FLIM, more particularly FLIM-based FRET Imaging (FLIM-FRET), where high count rates are of essence.

In scanning confocal microscope applications, a plurality of acquired histograms can be evaluated according to the method of the invention, particularly estimating a plurality of adjusted model functions.

According to another embodiment of the invention, the method comprises a computer program comprising computer program code, wherein when the computer program is executed on a computer, the computer program executes at least the fitting step of the adjusted model-function to the acquired decay histogram.

The fitting step particularly comprises the minimizing or maximizing of an objective function.

The problem according to the invention is furthermore solved by a computer program for fitting a model-function to a decay histogram, wherein the computer program comprises computer program code, wherein, when the computer program is executed on a computer, the computer performs the method according to the invention.

The terms 'processor' or 'computer', or system thereof, are used herein as ordinary context of the art, such as a general purpose processor or a micro-processor, RISC processor, an FPGA, or DSP, possibly comprising additional elements such as memory or communication ports. Optionally or additionally, the terms 'processor' or 'computer' or derivatives thereof denote an apparatus that is capable of carrying out a provided or an incorporated program and/or is capable of controlling and/or accessing data storage apparatus and/or other apparatus such as input and output ports.

The terms 'processor' or 'computer' denote also a plurality of processors or computers connected, and/or linked and/or otherwise communicating, possibly sharing one or more other resources such as a memory.

The terms 'Computer program' or 'computer program code' denote one or more instructions or directives or circuitry for performing a sequence of operations that generally represent an algorithm and/or other process or method. The program is stored in or on a medium such as RAM, ROM, or disk, or embedded in a circuitry accessible and executable by an apparatus such as a processor, a computer or other circuitry.

The processor and program may constitute the same apparatus, at least partially, such as an array of electronic gates, such as FPGA or ASIC, designed to perform a programmed sequence of operations, optionally comprising or linked with a processor or other circuitry.

In the context of embodiments of the present disclosure, by way of example and without limiting, terms such as 'operating' or 'executing' imply also capabilities, such as 'operable' or 'executable', respectively.

According to another embodiment of the invention, the decay histogram is acquired from an optical spectroscope or an optical microscope or microscope system, particularly for each pixel or groups of multiple pixels, particularly constituting regions of interest in the object image.

According to another embodiment of the invention, the optical microscope system comprises a single-photon time-correlated counting electronics, comprising a recording device. Such a microscope system is for example configured to perform FLIM. The microscope system particularly comprises a scanning confocal microscope.

According to another embodiment of the invention, the decay histogram is acquired, particularly for each pixel or groups of multiple pixels, particularly constituting regions of interest in the object image, by a time-resolved optical spectroscopy or microscopy application, particularly by FLIM, more particularly by a FLIM-based FRET Imaging (FLIM-FRET) application.

In the following, the invention is explained in detail with reference to exemplary embodiments shown in the figures. It is being noted that the drawings are not to scale. It is shown in

Fig. 1: schematic decay histograms and fitted model-functions;

Fig. 2: a difference between the fit results estimated from unadjusted model-functions and adjusted model-functions; and

Fig. 3: an explanatory drawing of the smallest resolvable interval.

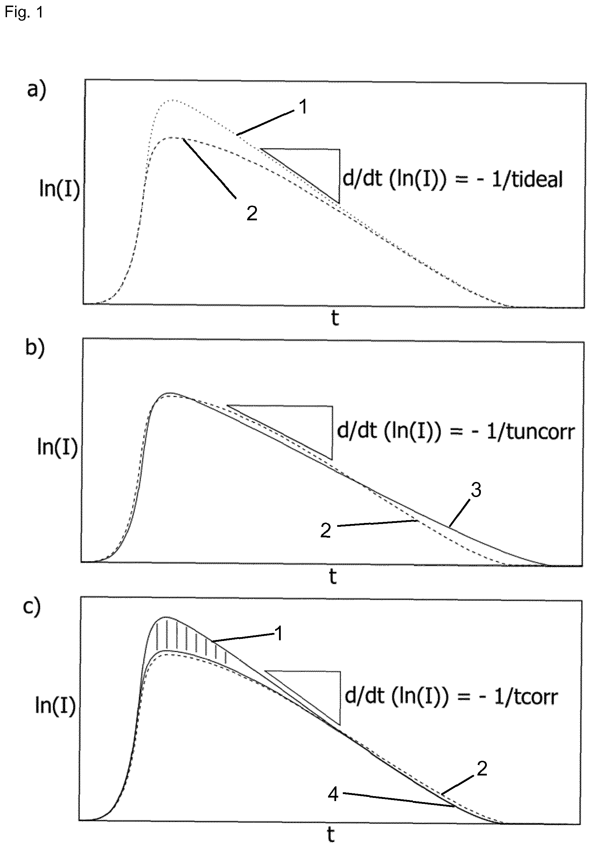

In Fig. 1, panel a), a decay histogram 1, 2 (shown as a dotted line) with a lifetime $t_{ideal}$, indicated by the slope d/dt (in (I)) is shown, wherein the histogram corresponds to a measurement, in which detector pulse pile-up is absent (in the following referred to as the pile-up free histogram).

The histogram's y-axis is plotted logarithmically indicating the number of detected photons per time bin (in (I)).

On the histogram's x-axis, the time t after the excitation pulse generating the detected photon is plotted, wherein the time is divided into separate, discrete channels.

The deviation of the shape from a single exponential decay at early time points is due to the finite width of the instrument response function. Thus, even the ideal histogram is a convolution of a single-exponential decay with an instrument response function.

In contrast to the pile up-free histogram 1, the histogram 2 plotted with a dashed line represents a measurement where detector pulse pile-up is present (in the following referred to as the pile-up histogram). Therefore, the total number of photons (and thus the area under the histogram) is diminished, due to the miscounting of piled-up pulses as a single pulse only by the recording device.

Furthermore, it can be seen that the distortion (and the height reduction) of the histogram is most pronounced at times shortly after the excitation pulse. This is because the probability for piled-up pulses is highest right after the excitation pulse and diminishes for longer times.

In Fig. 1, panel b) a non-linear curve fit to the pile-up histogram 2 (again indicated by a dashed line) with an unadjusted model-function 3, yields the lifetime $t_{uncorr}$. The unadjusted model-function 3 is not configured for correctly addressing for pile-up effects in the decay histogram 2. Due to the deformation of the pile-up histogram 2 the unadjusted model-function 3 (solid line) can therefore not coincide with the pile-up histogram 2 over the full decay. In order to minimize or maximize the respective objective function, the unadjusted model-function 3 compensates deviations systematically wrong, resulting in a prolonged lifetime $t_{uncorr}$.

Obviously, such a fit is not yielding the correct lifetime of the histogram/ sample.

Fig. 1, panel c), shows a non-linear curve fit to the pile-up histogram 2 (again indicated with a dashed line) with an adjusted model-function 4 according to the invention, yielding the lifetime $t_{corr}$.

The correction of the unadjusted model-function 3 with the probability of occurrence of not piled-up pulses (and thus accounting for the piled-up pulses), ensures that the resulting adjusted model-function 4 (solid line) shows no systematic deviations from the pile-up histogram 2 (dashed line). The obtained lifetime $t_{corr}$ is consistent with the expected value $t_{ideal}$.

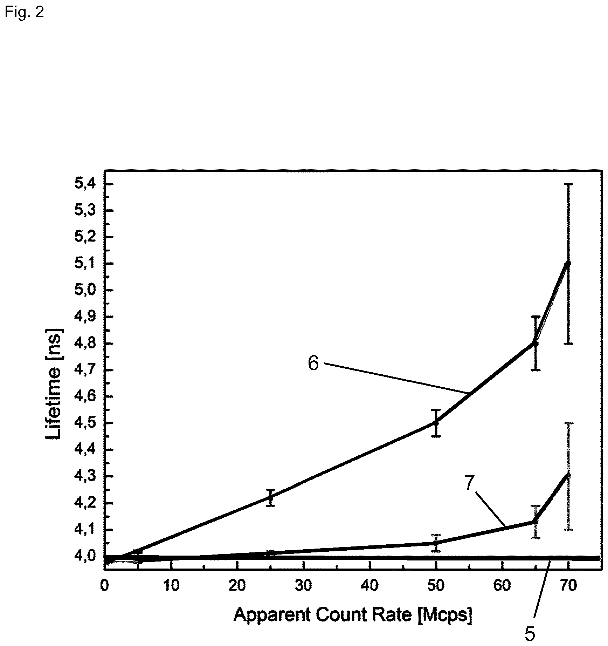

Fig. 2 shows the fit results for the lifetime (y-axis) of decay histograms 1, 2 recorded at different count rates (x-axis). The sample is the organic dye Atto-488™, from AttoTec™, Germany. The dye is known to exhibit a lifetime of 4 ns.

The excitation rate was set to 40 MHz, excitation of the dye was performed with laser light at 485 nm. The measurement system was a MicroTime 200 from PicoQuant GmbH Berlin. Photons were detected at a wavelength greater than 500 nm with a hybrid photon detector, comprising a photocathode and a first gain stage known from a photomultiplier and a subsequent gain stage known from an avalanche photo diode.

The flat horizontal line 5 indicates the 4 ns decay time of the dye that should be recovered by the fit algorithms. When the acquired decay histograms 1, 2 are fitted with the unadjusted model-function 3, the resulting lifetime 6 is increasing with increasing count rates, yielding increasingly wrong lifetimes. When the model-function is adjusted according to the invention with the probability of occurrence $p_i$, the estimated lifetime 7 remains almost constant over a large range of count rates (up to $70 \times 10^6$ counts per second).

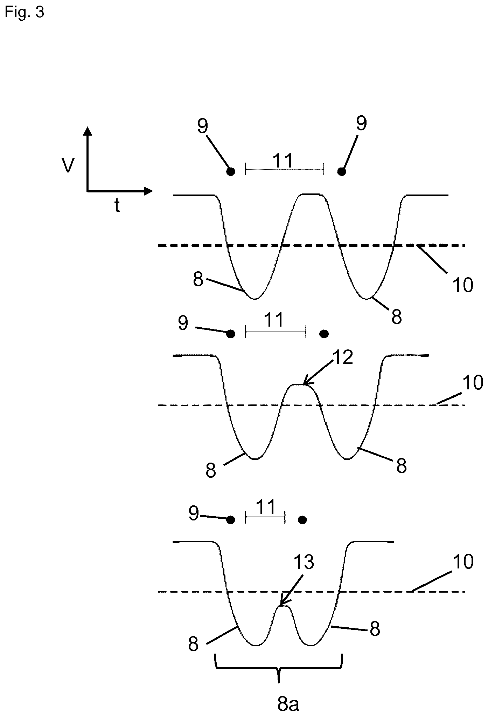

Fig. 3 shows schematically the smallest resolvable interval of two electric pulses 8 from a detector.

The black circles represent photon detection events 9. Below the respective circle, the associated electric pulse 8 is depicted. The dashed line corresponds to the discriminator threshold 10 of the recording device. When the voltage V at the recording device falls below the discriminator threshold 10 and subsequently rises above the discriminator threshold 10, the recording device registers an electric pulse 8. When two photons 9 are detected resulting in a sufficiently large time interval 11 between the associated electric pulses 8, this process is triggered twice at the recording device (as shown in the upper panel of Fig. 3). Therefore, two photons 9 are registered and recorded by the recording device.

In the middle panel a situation is shown, where the interval 11 between two successive electric pulses 8 is shorter as compared to the upper panel, to a degree, at which the voltage V between the pulses 8 rises above the discriminator threshold 10 of the recording device, but is not reaching its initial magnitude (indicated by the arrow 12). Nonetheless, the recording device registers two separate electric pulses 8 and therefore two photons 9 are registered and recorded.

In the lowest panel, however, the time interval 11 between the incident photons 9 is so short, that the associated electric pulses 8 overlap to a degree, at which the voltage V is not rising above the discriminator threshold 10 between the two electric pulses (indicated by arrow 13), but remains below. Therefore, the recording device registers only a single photon 9, as the voltage rises above the discriminator threshold 10 only after the second electric pulse 8.

The situation in the lowest panel is referred to as detector pulse pile-up and leads to the above detailed problems in evaluating decay histograms generated from such measurements.

## Claims

1. A method for estimating and correcting for detector pulse pile-up effects in time-correlated single-photon counting applications comprising the steps of:

   - Acquiring a decay histogram (1, 2) from a time-correlated single-photon counting measurement,

      wherein said measurement comprises the detection of photons (9) with a detector, the detector converting the detected photons (9) into corresponding electrical pulses (8) forming a sequence of electrical pulses, wherein the sequence of electrical pulses (8) comprises electric pulses (8a) that are spaced apart by a time interval (11) that is shorter than a smallest resolvable interval *dt* of a recording device, wherein the recording device registers the electric pulses (8) from the detector, wherein electric pulses exhibiting a spacing shorter than the smallest resolvable interval *dt* are registered as a single electric pulse by the recording device,

   - Estimating a probability of occurrence $p_i$ of electric pulses exhibiting a spacing longer than the smallest resolvable interval for each channel of the decay histogram (1, 2),
   - Fitting an adjusted model-function (4) to the decay histogram (1, 2), wherein the adjusted model-function (4) comprises an unadjusted model-function (3) adjusted for each channel of the decay histogram (1, 2) with the estimated probability of occurrence $p_i$ for the corresponding channel.

2. Method according to claim 1, wherein the probability of occurrence $p_i$ is expressed as an exponential function, wherein the exponent of the exponential function comprises the smallest resolvable interval as a parameter.

3. Method according to one of the claims 1 or 2, wherein the adjusted model-function (4) is fitted to the decay histogram (1, 2), wherein the unadjusted model-function (4) is multiplied for each channel of the decay histogram (1, 2) with the estimated probability of occurrence $p_i$ for the corresponding channel.

4. Method according to one of the preceding claims, wherein the probability of occurrence $p_i$ is expressed for each channel as

$$\mathrm{p}_i = exp(-d\mathrm{n}_i \cdot dt)$$

wherein $p_i$ is the probability of occurrence for the *i*-th channel of the histogram, *i* being an index for indexing the channels of the histogram and wherein $dn_i$ is a differential count rate for the *i*-th channel, particularly wherein said differential count rate depends on the unadjusted model-function (3) $Dec_{mod}(t_i)$, and an excitation rate $f_{exc}$ of the measurement, and wherein the unadjusted model-function (3) $Dec_{mod}(t_i)$ is multiplied by said probability of occurrence $(p_i)$.

5. Method according to one of the preceding claims, wherein the probability of occurrence $\mathrm{p}_i$ is expressed for each channel as

$$\mathrm{p}_i = exp\left(-f_{exc}^{\ 2} \cdot b \cdot Dec_{mod}(t_i) \cdot dt/N_{exc}\right) ,$$

wherein $N_{exc}$ is the number of excitation pulses of the measurement, $f_{exc}$ an excitation rate of the measurement, $Dec_{mod}(t_i)$ the unadjusted model-function (3), $b$ the channel width of the histogram (1, 2), wherein particularly the adjusted model-function (4) $Dec_{adj}(t_i)$ is expressed or can be expressed as

$$Dec_{adj}(t_i) = Dec_{mod}(t_i) \cdot exp\left(-f_{exc}^{\ 2} \cdot b \cdot Dec_{mod}(t_i) \cdot dt/N_{exc}\right).$$

6. Method according to any of the preceding claims, wherein the smallest resolvable interval is provided as a fixed parameter prior to applying a fitting algorithm for fitting the adjusted model-function (4) to the decay histogram (1, 2), or wherein the smallest resolvable interval is a fit-parameter that is adjustable during the fitting by the fit algorithm.

7. Method according to any of the preceding claims, wherein, if the smallest resolvable interval is used as an adjustable fit-parameter, the method estimates the smallest resolvable interval, wherein particularly the measurement is performed on a sample that exhibits a well-known, particularly mono-exponential lifetime, such as a sample comprising an organic dye.

8. Method according to one of the preceding claims, wherein the fitting of the adjusted model-function (4) to the decay histogram (1, 2) is performed by a fit algorithm based on or being a maximum-likelihood estimator.

9. Method according to one of the preceding claims, wherein the unadjusted model-function (3) is configured for taking into account an instrument response function, or wherein the unadjusted model-function (3) comprises the instrument response function.

10. Method according to one of the preceding claims, wherein a dead time of the recording device is shorter than the smallest resolvable interval.

11. Method according to one of the preceding claims, wherein the recording device has a time resolution better than 500 ps.

12. Method according to one of the preceding claims, wherein the decay histogram (1, 2) is acquired from a sample, wherein a lifetime of the sample is longer than 0.02 ns, particularly longer than 0.05 ns, 0.1 ns, 0.15 ns, 0.2 ns, or 0.25 ns, more particularly longer than 0.5 ns, and/or shorter than 100 $\mu$s, particularly shorter than 1$\mu$s, more particularly shorter than 50 ns, more particularly shorter than 20 ns, 10 ns or 5 ns.

13. Method according to one of the preceding claims, wherein the measurement is performed on a photo-luminescent sample, particularly on a fluorescent sample or on a phosphorescent sample, particularly emitting photons in the wavelength range between 200 nm and 2000 nm.

**14.** Method according to one of the preceding claims, wherein the method uses a computer program comprising computer program code, wherein when the computer program is executed on a computer, the computer program executes at least the fitting step of the adjusted model-function (4) to the acquired decay histogram (1, 2).

**15.** Computer program for fitting a model-function to a decay histogram, wherein the computer program comprises computer program code, wherein when the computer program is executed on a computer, the computer performs the method according to one of the claims 1 to 13.

**Patentansprüche**

**1.** Ein Verfahren zum Schätzen und Korrigieren von Detektor-Impuls-Pile-up-Effekten in zeitkorrelierten Einzelphotonen-Zählanwendungen, umfassend die Schritte:

- Erfassen eines Abklinghistogramms (1, 2) aus einer zeitkorrelierten Einzelphotonenzählmessung,

wobei besagte Messung die Detektion von Photonen (9) mit einem Detektor umfasst, wobei der Detektor die detektierten Photonen (9) in entsprechende elektrische Impulse (8) umwandelt, die eine Sequenz von elektrischen Impulsen ausbilden, wobei die Sequenz von elektrischen Impulsen (8) elektrische Impulse (8a) umfasst, die durch ein Zeitintervall (11) beabstandet sind, das kürzer als ein kleinstes auflösbares Intervall $dt$ eines Aufzeichnungsgeräts ist, wobei das Aufzeichnungsgerät die elektrischen Impulse (8) von dem Detektor registriert, wobei elektrische Impulse, die einen kürzeren Abstand als das kleinste auflösbare Intervall $dt$ aufweisen, von dem Aufzeichnungsgerät als ein einziger elektrischer Impuls registriert werden,

- Schätzen einer Auftrittswahrscheinlichkeit $p_i$ von elektrischen Impulsen, die einen größeren Abstand als das kleinste auflösbare Intervall für jeden Kanal des Abklinghistogramms (1, 2) aufweisen,
- Fitten einer angepassten Modellfunktion (4) an das Abklinghistogramm (1, 2), wobei die angepasste Modellfunktion (4) eine unangepasste Modellfunktion (3) umfasst, die für jeden Kanal des Abklinghistogramms (1, 2) mit der geschätzten Auftrittswahrscheinlichkeit $p_i$ für den entsprechenden Kanal angepasst wird.

**2.** Das Verfahren gemäß Anspruch 1, wobei die Auftrittswahrscheinlichkeit $p_i$ durch eine Exponentialfunktion ausgedrückt wird, wobei der Exponent der Exponentialfunktion das kleinste auflösbare Intervall als einen Parameter umfasst.

**3.** Ein Verfahren gemäß einem der Ansprüche 1 oder 2, wobei die angepasste Modellfunktion (4) an das Abklinghistogramm (1, 2) gefittet wird, wobei die unangepasste Modellfunktion (4) für jeden Kanal des Abklinghistogramms (1, 2) mit der geschätzten Auftrittswahrscheinlichkeit $p_i$ für den entsprechenden Kanal multipliziert wird.

**4.** Das Verfahren gemäß einem der vorhergehenden Ansprüche, wobei die Auftrittswahrscheinlichkeit $p_i$ für jeden Kanal ausgedrückt wird als

$$p_i = \exp(-dn_i \cdot dt)$$

wobei $p_i$ die Auftrittswahrscheinlichkeit für den i-ten Kanal des Histogramms ist, wobei $i$ ein Index zum Indizieren der Kanäle des Histogramms ist, und wobei $dni$ eine differentielle Zählrate für den i-ten Kanal ist, insbesondere wobei besagte differentielle Zählrate von der unangepassten Modellfunktion (3) $Dec_{mod}(t_i)$ und einer Anregungsrate $f_{exc}$ der Messung abhängt, und wobei die unangepasste Modellfunktion (3) $Dec_{mod}(t_i)$ mit besagter Auftrittswahrscheinlichkeit ($p_i$) multipliziert wird.

**5.** Das Verfahren gemäß einem der vorhergehenden Ansprüche, wobei die Auftrittswahrscheinlichkeit $p_i$ für jeden Kanal ausgedrückt wird als

$$p_i = \exp(-f_{exc}^2 \cdot b \cdot Dec_{mod}(t_i) \cdot dt/N_{exc})$$

wobei $N_{exc}$ die Anzahl der Anregungspulse der Messung ist, $f_{exc}$ eine Anregungsrate der Messung, $Dec_{mod}(t_i)$ die

unangepaßte Modellfunktion (3), *b* die Kanalbreite des Histogramms (1, 2), wobei insbesondere die angepasste Modellfunktion (4) $Dec_{adj}(t_i)$ ausgedrückt wird oder ausgedrückt werden kann als

$$Dec_{adj}(t_i) = Dec_{mod}(t_i) \cdot exp(-f_{exc}^2 \cdot b \cdot Dec_{mod}(t_i) \cdot dt/N_{exc}).$$

**6.** Das Verfahren gemäß einem der vorhergehenden Ansprüche, wobei das kleinste auflösbare Intervall als ein fester Parameter bereitgestellt wird, bevor ein Fitting-Algorithmus zum Fitten der angepassten Modellfunktion (4) an das Abklinghistogramm (1, 2) angewendet wird, oder wobei das kleinste auflösbare Intervall ein Fit-Parameter ist, der der während der Anpassung durch den Fitting-Algorithmus einstellbar ist.

**7.** Das Verfahren gemäß einem der vorhergehenden Ansprüche, wobei, wenn das kleinste auflösbare Intervall als einstellbarer Fit-Parameter verwendet wird, das Verfahren das kleinste auflösbare Intervall schätzt, wobei insbesondere die Messung an einer Probe durchgeführt wird, die eine bekannte, insbesondere monoexponentielle Lebensdauer aufweist, wie eine Probe, die einen organischen Farbstoff umfasst.

**8.** Das Verfahren gemäß einem der vorhergehenden Ansprüche, wobei das Fitten der angepassten Modellfunktion (4) an das Abklinghistogramm (1, 2) durch einen Fit-Algorithmus durchgeführt wird, der auf einem Maximum-Likelihood-Schätzer basiert oder ein solcher ist.

**9.** Das Verfahren gemäß einem der vorhergehenden Ansprüche, wobei die unangepasste Modellfunktion (3) dazu eingerichtet ist, eine Instrumentenantwortfunktion zu berücksichtigen, oder wobei die unangepasste Modellfunktion (3) die Instrumentenantwortfunktion umfasst.

**10.** Das Verfahren gemäß einem der vorhergehenden Ansprüche, wobei eine Totzeit des Aufzeichnungsgerätes kürzer ist als das kleinste auflösbare Intervall.

**11.** Das Verfahren gemäß einem der vorhergehenden Ansprüche, wobei das Aufzeichnungsgerät eine Zeitauflösung von besser als 500 ps aufweist.

**12.** Das Verfahren gemäß einem der vorhergehenden Ansprüche, wobei das Abklinghistogramm (1, 2) von einer Probe erfasst wird, wobei eine Lebensdauer der Probe länger ist als 0,02 ns, insbesondere länger als 0,05 ns, 0,1 ns, 0,15 ns, 0,2 ns oder 0,25 ns, weiter insbesondere länger als 0,5 ns, und/oder kürzer als 100 µs, insbesondere kürzer als 1µs, weiter insbesondere kürzer als 50 ns, weiter insbesondere kürzer als 20 ns, 10 ns oder 5 ns.

**13.** Das Verfahren gemäß einem der vorhergehenden Ansprüche, wobei die Messung an einer photo- lumineszierenden Probe, insbesondere an einer fluoreszierenden Probe oder an einer phosphoreszierenden Probe durchgeführt wird, die insbesondere Photonen emittieren im Wellenlängen Bereich zwischen 200 nm und 2000 nm.

**14.** Das Verfahren gemäß einem der vorhergehenden Ansprüche, wobei das Verfahren ein Computerprogramm verwendet, das einen Computerprogrammcode umfasst, wobei, wenn das Computerprogramm auf einem Computer ausgeführt wird, das Computerprogramm zumindest den Schritt des Fittens der angepassten Modellfunktion (4) an das erfasste Abklinghistogramm (1, 2) ausführt.

**15.** Computerprogramm zum Fitten einer Modellfunktion an ein Abklinghistogramm, wobei das Computerprogramm Computerprogrammcode umfasst, wobei, wenn das Computerprogramm auf einem Computer ausgeführt wird, der Computer das Verfahren gemäß einem der Ansprüche 1 bis 13 durchführt.


**Revendications**

**1.** Procédé d'estimation et de correction d'effets d'empilement d'impulsion de détecteur dans des applications de comptage monophotonique à corrélation temporelle comprenant les étapes consistant à :

- acquérir un histogramme de décroissance (1, 2) à partir d'une mesure de comptage monophotonique à corrélation temporelle,

dans lequel ladite mesure comprend la détection de photons (9) avec un détecteur, le détecteur convertissant les photons détectés (9) en impulsions électriques correspondantes (8) formant une séquence d'impulsions électriques,

dans lequel la séquence d'impulsions électriques (8) comprend des impulsions électriques (8a) qui sont espacées par un intervalle de temps (11) qui est plus court qu'un intervalle résolvable le plus petit $dt$ d'un dispositif d'enregistrement,

dans lequel le dispositif d'enregistrement enregistre les impulsions électriques (8) provenant du détecteur, dans lequel des impulsions électriques présentant un espacement plus court que l'intervalle résolvable le plus petit $dt$ sont enregistrées en tant qu'impulsion électrique unique par le dispositif d'enregistrement,

- estimer une probabilité d'occurrence $p_i$ d'impulsions électriques présentant un espacement plus long que l'intervalle résolvable le plus petit pour chaque canal de l'histogramme de décroissance (1, 2),

- caler une fonction de modèle ajustée (4) sur l'histogramme de décroissance (1, 2), dans lequel la fonction de modèle ajustée (4) comprend une fonction de modèle non ajustée (3) ajustée pour chaque canal de l'histogramme de décroissance (1, 2) avec la probabilité d'occurrence estimée $p_i$ pour le canal correspondant.

2. Procédé selon la revendication 1, dans lequel la probabilité d'occurrence $p_i$ est exprimée en tant que fonction exponentielle, dans lequel l'exposant de la fonction exponentielle comprend l'intervalle résolvable le plus petit en tant que paramètre.

3. Procédé selon une des revendications 1 ou 2, dans lequel la fonction de modèle ajustée (4) est calée sur l'histogramme de décroissance (1, 2), dans lequel la fonction de modèle non ajustée (4) est multipliée pour chaque canal de l'histogramme de décroissance (1, 2) par la probabilité d'occurrence estimée $p_i$ pour le canal correspondant.

4. Procédé selon une des revendications précédentes, dans lequel la probabilité d'occurrence $p_i$ est exprimée pour chaque canal en tant que

$$p_i = exp(-dn_i \cdot dt)$$

dans lequel $p_i$ est la probabilité d'occurrence pour le $i^e$ canal de l'histogramme, i étant un indice pour indexer les canaux de l'histogramme et dans lequel $dn_i$ est un taux de comptage différentiel pour le $i^e$ canal, notamment dans lequel ledit taux de comptage différentiel dépend de la fonction de modèle non ajustée (3) $Dec_{mod}(t_i)$, et d'un taux d'excitation $f_{exc}$ de la mesure, et dans lequel la fonction de modèle non ajustée (3) $Dec_{mod}(t_i)$ est multipliée par ladite probabilité d'occurrence ($p_i$).

5. Procédé selon une des revendications précédentes, dans lequel la probabilité d'occurrence $p_i$ est exprimée pour chaque canal en tant que

$$p_i = exp(-f_{exc}^2 \cdot b \cdot Dec_{mod}(t_i) \cdot dt/N_{exc}),$$

dans lequel $N_{exc}$ est le nombre d'impulsions d'excitation de la mesure, $f_{exc}$ un taux d'excitation de la mesure, $Dec_{mod}(t_i)$ la fonction de modèle non ajustée (3), $b$ la largeur de canal de l'histogramme (1, 2), dans lequel notamment la fonction de modèle ajustée (4) $Dec_{adj}(t_i)$ est exprimée ou peut être exprimée en tant que

$$Dec_{adj}(t_i) = Dec_{mod}(t_i) \cdot exp(-f_{exc}^2 \cdot b \cdot Dec_{mod}(t_i) \cdot dt/N_{exc}).$$

6. Procédé selon l'une quelconque des revendications précédentes, dans lequel l'intervalle résolvable le plus petit est fourni en tant que paramètre fixe avant d'appliquer un algorithme de calage pour caler la fonction de modèle ajustée (4) sur l'histogramme de décroissance (1, 2), ou dans lequel l'intervalle résolvable le plus petit est un paramètre calé qui peut être ajusté au cours du calage par l'algorithme calé.

7. Procédé selon l'une quelconque des revendications précédentes, dans lequel, si l'intervalle résolvable le plus petit est utilisé que paramètre calé pouvant être ajusté, le procédé estime l'intervalle résolvable le plus petit, dans lequel notamment la mesure est réalisée sur un échantillon qui présente une durée de vie mono-exponentielle bien connue, tel qu'un échantillon comprenant un colorant organique.

8. Procédé selon une des revendications précédentes, dans lequel le calage de la fonction de modèle ajustée (4) sur l'histogramme de décroissance (1, 2) est réalisé par un algorithme calé basé sur ou qui est un estimateur de probabilité maximale.

9. Procédé selon une des revendications précédentes, dans lequel la fonction de modèle non ajustée (3) est configurée pour prendre en compte une fonction de réponse d'instrument, ou dans lequel la fonction de modèle non ajustée (3) comprend la fonction de réponse d'instrument.

10. Procédé selon une des revendications précédentes, dans lequel un temps mort du dispositif d'enregistrement est plus court que l'intervalle résolvable le plus petit.

11. Procédé selon une des revendications précédentes, dans lequel le dispositif d'enregistrement a une résolution temporelle meilleure que 500 ps.

12. Procédé selon une des revendications précédentes, dans lequel l'histogramme de décroissance (1, 2) est acquis à partir d'un échantillon, dans lequel une durée de vie de l'échantillon est plus longue que 0,02 ns, en particulier plus longue que 0,05 ns, 0,1 ns, 0,15 ns, 0,2 ns ou 0,25 ns, plus particulièrement plus longue que 0,5 ns, et/ou plus courte que 100 $\mu$s, en particulier plus courte que 1 $\mu$s, plus particulièrement plus courte que 50 ns, plus particulièrement plus courte que 20 ns, 10 ns ou 5 ns.

13. Procédé selon une des revendications précédentes, dans lequel la mesure est réalisée sur un échantillon photoluminescent, notamment sur un échantillon fluorescent ou sur un échantillon phosphorescent, notamment émettant des photons dans la plage de longueurs d'onde comprise entre 200 nm et 2000 nm.

14. Procédé selon une des revendications précédentes, dans lequel le procédé utilise un programme informatique comprenant du code de programme informatique, dans lequel lorsque le programme informatique est exécuté sur un ordinateur, le programme informatique exécute au moins l'étape de calage de la fonction de modèle ajustée (4) sur l'histogramme de décroissance acquis (1, 2).

15. Programme informatique pour caler une fonction de modèle sur un histogramme de décroissance, dans lequel le programme informatique comprend du code de programme informatique, dans lequel lorsque le programme informatique est exécuté sur un ordinateur, l'ordinateur réalise le procédé selon une des revendications 1 à 13.

Fig. 1

a) $\ln(I)$  1  2  $d/dt\,(\ln(I)) = -\,1/tideal$  t

b) $\ln(I)$  $d/dt\,(\ln(I)) = -\,1/tuncorr$  3  2  t

c) $\ln(I)$  1  $d/dt\,(\ln(I)) = -\,1/tcorr$  2  4  t

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010089363 A1

- EP 3370086 A1

**Non-patent literature cited in the description**

- **COATES B P.** The correction for photon 'pile-up' in the measurement of radiative lifetimes. *Journal of Physics E Scientific Instruments,* 01 January 1968, vol. 1 (1), 878, , 879

- **REED S J B.** Dead time corrections for x-ray intensity measurements with a Si(Li) detector. *Journal of Physics E Scientific Instruments,* 01 October 1972, vol. 5 (10), 994-996
- **M. PATTING ; M. WAHL ; P. KAPUSTA ; R. ERDMANN.** Dead-time effects in TCSPC data analysis. *Proceedings of SPIE,* 2007, vol. 6583, 658307